# EUROPEAN PATENT APPLICATION

(11) **EP 4 559 724 A1**
(43) Date of publication of application: **28.05.2025**
(21) Application number: 24209860.6
(22) Date of filing: 30.10.2024
(51) Int. Cl.: B60L 3/12, B60L 7/18, B60L 15/20, B60L 58/12, B60W 30/188

(54) **BATTERY ELECTRIC VEHICLE**

(30) Priority: 14.11.2023 JP 2023193981
(71) Applicant: TOYOTA JIDOSHA KABUSHIKI KAISHA, Toyota-shi, Aichi-ken 471-8571 (JP)
(72) Inventor: ISAMI, Yoichiro, Toyota-shi, Aichi-ken 471-8571 (JP); IMAMURA, Tatsuya, Toyota-shi, Aichi-ken 471-8571 (JP); MIZUTANI, Kenji, Toyota-shi, Aichi-ken 471-8571 (JP); OKADA, Tsuyoshi, Toyota-shi, Aichi-ken 471-8571 (JP); YAMAMURO, Naoki, Toyota-shi, Aichi-ken 471-8571 (JP); YUASA, Ryohei, Toyota-shi, Aichi-ken 471-8571 (JP)
(74) Representative: Cabinet Beau de Loménie

(57) **Abstract**

A battery electric vehicle (100) according to an embodiment of the present disclosure includes a pseudo gear shift operation member that imitates an operation member used in gear shift operation of a manual transmission internal combustion engine vehicle in addition to a driving operation member used in driving thereof. A control apparatus that controls battery electric vehicle is configured to control the operation of the battery electric vehicle with respect to operation of the driving operation member in accordance with an operation state of the pseudo gear shift operation member. The control apparatus executes deceleration control that autonomously decelerates an own vehicle when the own vehicle enters a curved road (COR). The control apparatus encourages a driver to operate the pseudo gear shift operation member in a manner similar to that when a gear ratio of the manual transmission internal combustion engine vehicle is increased when the deceleration control is executed.

## Description

### 1. Field of the Invention

The present disclosure relates to a battery electric vehicle having an electric motor as a drive source.

### 2. Description of Related Art

Deceleration control is known as one of functions of an advanced driver-assistance system installed in a vehicle as disclosed in Japanese Unexamined Patent Application Publication No. 2018-095112 (JP 2018-095112 A), for example. The deceleration control is a technology that makes it easier to go around a curved road by autonomously decelerating when the own vehicle enters the curved road. The related art disclosed in JP 2018-095112 A is hereinafter referred to as a first related art.

In Japanese Patent No. 6787507, a battery electric vehicle that can pseudo-reproduce manual gear shift operation of a vehicle (hereinafter referred to as a manual transmission internal combustion engine vehicle), by the control of an electric motor, including a manual transmission in which the power source is an internal combustion engine is disclosed. The related art disclosed in Japanese Patent No. 6787507 is hereinafter referred to as a second related art.

### SUMMARY OF THE INVENTION

When the first related art is applied to a manual transmission internal combustion engine vehicle, the engine speed decreases in accordance with the decrease of the vehicle speed. However, it is required to maintain the engine speed within a torque band in order to obtain a satisfactory acceleration property at the time of exiting a curved road. This is also a problem shared with a case in which the first related art is applied to the second related art. The virtual engine speed of a virtual engine decreases in the manual transmission internal combustion engine vehicle reproduced in the battery electric vehicle of the second related art when the deceleration control is executed. When the virtual engine speed goes out of the torque band, it becomes difficult to obtain a satisfactory acceleration property even with the battery electric vehicle of the second related art.

The present disclosure has been made in view of the problems described above. One object of the present disclosure is to reduce cases in which an acceleration property when a curved road is exited when deceleration control is activated at the time of entrance to the curved road decreases in a battery electric vehicle capable of simulating gear shift operation of a manual transmission internal combustion engine vehicle.

According to one embodiment of the present disclosure, a battery electric vehicle includes a pseudo gear shift operation member that imitates an operation member used in gear shift operation of a manual transmission internal combustion engine vehicle besides a driving operation member used in driving of the battery electric vehicle. A control apparatus that controls battery electric vehicle is configured to control the operation of the battery electric vehicle with respect to operation of the driving operation member in accordance with an operation state of the pseudo gear shift operation member. The control apparatus executes deceleration control that autonomously decelerates an own vehicle when the own vehicle enters a curved road. The control apparatus encourages a driver to operate the pseudo gear shift operation member in a manner similar to that when a gear ratio of the manual transmission internal combustion engine vehicle is increased when the deceleration control is executed.

According to the battery electric vehicle according to one embodiment of the present disclosure, the deceleration control is executed when the own vehicle enters the curved road. At this time, the driver is encouraged by the control apparatus to operate the pseudo gear shift operation member in a manner similar to that when the gear ratio of the manual transmission internal combustion engine vehicle is increased when the control is executed. As a result of the driver encouraged by the control apparatus operating the pseudo gear shift operation member, the battery electric vehicle operates as though the operation of increasing the gear ratio in the manual transmission internal combustion engine vehicle is performed, and the decrease of the acceleration property when the curved road is exited is reduced.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram showing a configuration of a battery electric vehicle according to an embodiment of the present disclosure;
FIG. 2 is a diagram showing a configuration of a control apparatus relating to torque control of the battery electric vehicle;
FIG. 3 is a diagram showing one example of an ideal gear shift operation at the time of deceleration;
FIG. 4 is a diagram describing downshift notification at the time of execution of deceleration control;
FIG. 5 is a flowchart showing a flow of the downshift notification at the time of execution of the deceleration control; and
FIG. 6 is a flowchart showing a flow of autonomous downshift at the time of execution of the deceleration control.

### DETAILED DESCRIPTION OF EMBODIMENTS

### 1. Configuration of Power System of Battery Electric Vehicle

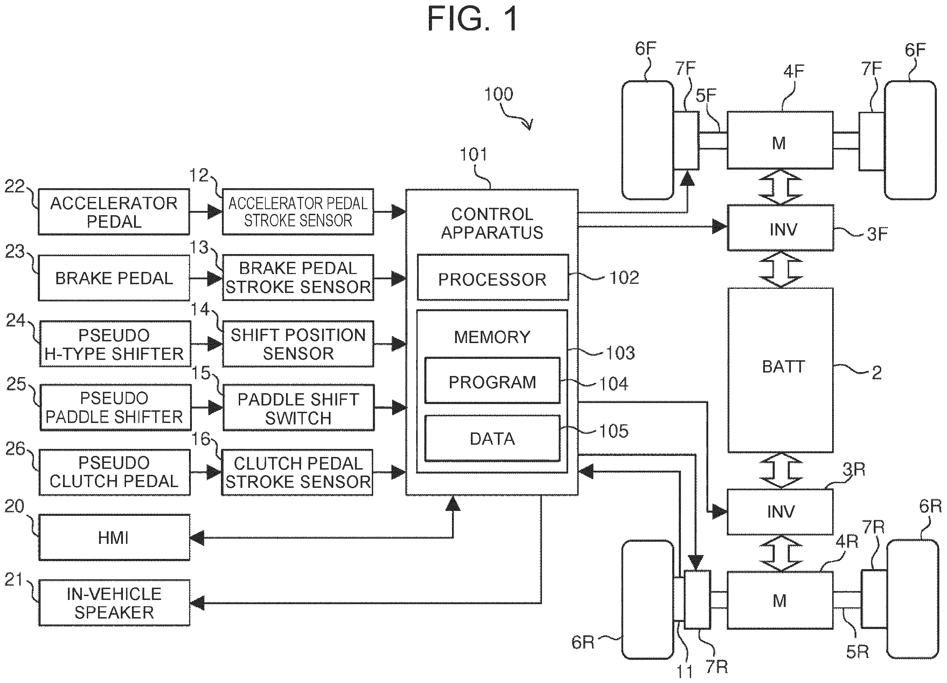

FIG. 1 is a schematically showing a configuration of a battery electric vehicle 100 according to an embodiment of the present disclosure. First, a configuration of a power system of the battery electric vehicle 100 is described with reference to FIG. 1.

The battery electric vehicle 100 includes two electric motors (M) 4F, 4R on the front and the rear as power sources for traveling. The electric motors 4F, 4R are three-phase AC motors, for example. The front electric motor 4F is connected to a front drive shaft 5F that drives front wheels 6F. The rear electric motor 4R is connected to a rear drive shaft 5R that drives rear wheels 6R. The front wheels 6F are suspended from electronically controlled front suspensions 7F independent from each other on the left and the right. The rear wheels 6R are suspended from electronically controlled rear suspensions 7R independent from each other on the left and the right.

Inverters (INVs) 3F, 3R are respectively attached to the front electric motor 4F and the rear electric motor 4R. Each of the front inverter 3F and the rear inverter 3R is connected to a battery (BATT) 2. In other words, the battery electric vehicle 100 is a battery electric vehicle (BEV) that travels by electrical energy accumulated in the battery 2. The inverters 3F, 3R are voltage inverters, for example, and control the torque of the electric motors 4F, 4R by PWM control.

### 2. Configuration of Control System of Battery Electric Vehicle

Next, a configuration of a control system of the battery electric vehicle 100 is described with reference to FIG. 1.

The battery electric vehicle 100 includes a vehicle speed sensor 11. At least one of wheel speed sensors (not shown) provided in each of the left and right front wheels 6F and the left and right rear wheels 6R is used as the vehicle speed sensor 11. The battery electric vehicle 100 includes an accelerator pedal stroke sensor 12. The accelerator pedal stroke sensor 12 is provided in an accelerator pedal 22 and outputs a signal showing the depression amount of the accelerator pedal 22, in other words, the accelerator operation amount. The battery electric vehicle 100 includes a brake pedal stroke sensor 13. The brake pedal stroke sensor 13 is provided in a brake pedal 23 and outputs a signal showing the depression amount of the brake pedal 23, in other words, the brake operation amount.

The accelerator pedal 22 and the brake pedal 23 are driving operation members used in the driving of the battery electric vehicle 100. The battery electric vehicle 100 includes pseudo gear shift operation members that imitate operation members used in the gear shift operation of the manual transmission internal combustion engine vehicle besides those driving operation members. The pseudo gear shift operation members include a pseudo H-type shifter 24, a pseudo paddle shifter 25, and a pseudo clutch pedal 26 below.

The pseudo H-type shifter 24 is a dummy different from an original H-type shifter. The pseudo H-type shifter 24 has a structure caused to be similar to a shift stick provided in a console and can move along an H-type gate between shift positions. However, the battery electric vehicle 100 does not include an actual transmission, and hence the shift positions of the pseudo H-type shifter 24 are virtual shift positions. A shift position sensor 14 is provided in the pseudo H-type shifter 24. The shift position sensor 14 outputs a signal indicating a shift position selected by the pseudo H-type shifter 24.

The pseudo paddle shifter 25 is a dummy different from an original paddle shifter that is one type of a sequential shifter. The pseudo paddle shifter 25 has a structure caused to be similar to shift paddles attached to a steering wheel, and left and right paddles can be independently moved. A paddle shift switch 15 is provided on the pseudo paddle shifter 25. The paddle shift switch 15 outputs an upshift signal when the paddle on the right side is pulled and outputs a downshift signal when the paddle on the left side is pulled.

The pseudo clutch pedal 26 is a dummy different from an original clutch operation apparatus. The pseudo clutch pedal 26 has a structure caused to be similar to a clutch pedal included in a related-art manual transmission internal combustion engine vehicle. For example, the pseudo clutch pedal 26 includes a reaction force mechanism that generates a reaction force against depression by a driver. The position when a pedal force is not applied is a starting position of the pseudo clutch pedal 26, and the position when the pseudo clutch pedal 26 is depressed all the way is a terminal position of the pseudo clutch pedal 26. The driver can operate the pseudo clutch pedal 26 against the reaction force from the reaction force mechanism from the starting position to the terminal position. A clutch pedal stroke sensor 16 is provided in the pseudo clutch pedal 26. The clutch pedal stroke sensor 16 outputs a signal indicating the depression amount of the pseudo clutch pedal 26. The battery electric vehicle 100 does not include an actual clutch, and hence the operation amount, in other words, the clutch operation amount of the pseudo clutch pedal 26 is a virtual clutch operation amount.

The battery electric vehicle 100 includes a human machine interface (HMI) 20 serving as an interface with respect to the driver and an in-vehicle speaker 21. The HMI 20 includes a touch screen display. The HMI 20 displays information on the touch screen display and accepts input from the driver by touch operation on the touch screen display. The in-vehicle speaker 21 provides information to the driver by voice and can output pseudo engine sound caused to be similar to engine sound in an internal combustion engine vehicle.

The battery electric vehicle 100 includes a control apparatus 101. Sensors and equipment to be controlled mounted on the battery electric vehicle 100 are connected to the control apparatus 101 by an in-vehicle network. Various sensors other than the vehicle speed sensor 11, the accelerator pedal stroke sensor 12, the brake pedal stroke sensor 13, the shift position sensor 14, the paddle shift switch 15, and the clutch pedal stroke sensor 16 are also mounted on the battery electric vehicle 100.

The control apparatus 101 is typically an electronic control unit (ECU). The control apparatus 101 may be a combination of a plurality of ECUs. The control apparatus 101 includes at least a processor 102 and a memory 103. The memory 103 includes a RAM that temporarily records data therein and a ROM that saves a program 104 executable by the processor 102 and various data 105 related to the program therein. The program 104 is configured by a plurality of instruction codes. The processor 102 reads out and executes the program 104 and the data 105 from the memory 103 and generates control signals on the basis of signals acquired from each sensor. The number of the processors 102 included in the control apparatus 101 may be one or a plurality of numbers.

### 3. Control Mode

The control apparatus 101 can control the battery electric vehicle 100 by various control modes. The control mode can be selected by the driver themself as a result of the driver performing touch operation on the touch screen display of the HMI 20. In detail, as a result of performing touch operation on the touch screen display of the HMI 20, one or a plurality of programs 104 linked to each touch operation is read out from the memory 103 and is executed by the processor 102.

The control modes selectable by the HMI 20 include an autonomous mode and a manual mode. The autonomous mode is a control mode for driving the battery electric vehicle 100 as a normal BEV. In the autonomous mode, the driver can basically drive the battery electric vehicle 100 simply by the operation of the accelerator pedal 22, the brake pedal 23, and the steering wheel (not shown). In the autonomous mode, the shift operation of the pseudo H-type shifter 24, the shift operation of the pseudo paddle shifter 25, and the clutch operation of the pseudo clutch pedal 26 are disabled.

The manual mode is a control mode for operating the battery electric vehicle 100 in a manner similar to that of a manual transmission internal combustion engine vehicle. When the manual mode is selected, a shift mode can be further selected. The shift mode includes a paddle shift mode and a stick shift mode. The paddle shift mode is a mode using the pseudo paddle shifter 25 in the shift operation. In the paddle shift mode, the shift operation of the pseudo H-type shifter 24 is disabled. In the paddle shift mode, operation when a manual-gear-shift gear ratio is switched is reproduced by the shift operation of the pseudo paddle shifter 25. Clutch operation in a real paddle-shift manual transmission is autonomously performed by a robot. Therefore, in the paddle shift mode, the clutch operation of the pseudo clutch pedal 26 is not needed. In the paddle shift mode, the clutch operation of the pseudo clutch pedal 26 is disabled.

The stick shift mode is a mode that uses the pseudo H-type shifter 24 in the shift operation. In the stick shift mode, the shift operation of the pseudo paddle shifter 25 is disabled. In the stick shift mode, operation when a manual-gear-shift gear ratio is switched is reproduced by the shift operation of the pseudo H-type shifter 24. The stick shift mode includes a stick shift mode with clutch operation in which the driver themself performs the clutch operation and a stick shift mode without clutch operation that leaves the clutch operation to a robot. When the latter is selected, the clutch operation of the pseudo clutch pedal 26 is disabled.

### 4. Torque Control

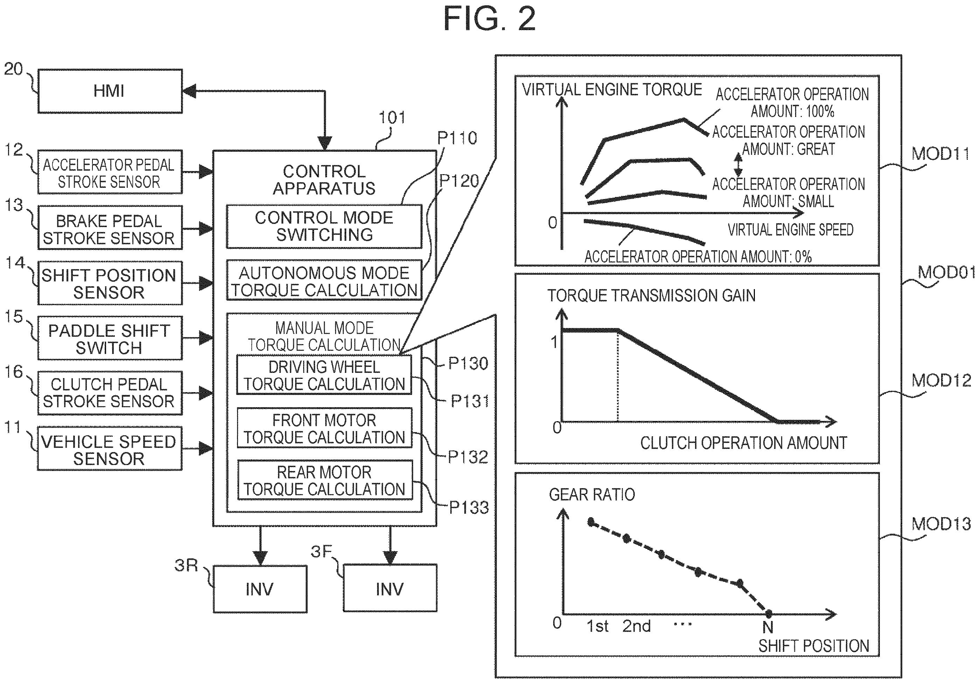

FIG. 2 is a diagram showing a configuration of the control apparatus 101 relating to torque control of the battery electric vehicle 100. When one or a plurality of programs 104 for torque control stored in the memory 103 is executed by the processor 102, the processor 102 functions as a torque control apparatus.

A control mode signal from the HMI 20 is input to the control apparatus 101 serving as the torque control apparatus. The control mode signal includes information relating to the control mode selected by the driver. The control apparatus 101 executes processing P110 on the basis of the control mode signal. In the processing P110, the control mode is switched in accordance with the control mode signal. Switching that especially affects the torque control out of the switching of the control mode is switching between the autonomous mode and the manual mode.

When the control mode is switched to the autonomous mode, the control apparatus 101 executes processing P120 for torque calculation in the autonomous mode. In the processing P120, the control apparatus 101 acquires the vehicle speed from a signal of the vehicle speed sensor 11 and acquires the accelerator operation amount from a signal of the accelerator pedal stroke sensor 12. The control apparatus 101 has a motor torque map of which parameters are the accelerator operation amount and the vehicle speed. The control apparatus 101 inputs the vehicle speed and the accelerator operation amount to the motor torque map and controls the inverters 3F, 3R so as to cause the electric motors 4F, 4R to generate the torque acquired in the motor torque map.

When the control mode is switched to the manual mode, the control apparatus 101 executes processing P130 for torque calculation in the manual mode. The processing P130 includes processing P131 for calculating the torque to be generated by driving wheels. The processing P130 includes processing P132 and processing P133. The processing P132 is processing for calculating the torque generated by the front electric motor 4F, and the processing P133 is processing for calculating the torque generated by the rear electric motor 4R. The processing P132 and the processing P133 are executed in accordance with the torque allocation between the front wheels 6F and the rear wheels 6R and the driving wheel torque calculated in the processing P130.

A vehicle model MOD01 is used in the calculation of the driving wheel torque in the processing P131. The vehicle model MOD01 includes an engine model MOD11, a clutch model MOD12, and a transmission model MOD13. An engine virtually realized by the vehicle model MOD01 is referred to as a virtual engine, a virtually realized clutch is referred to as a virtual clutch, and a virtually realized transmission is referred to as a virtual transmission. A virtual engine is modeled in the engine model MOD11. A virtual clutch is modeled in the clutch model MOD12. A virtual transmission is modeled in the transmission model MOD13.

The engine model MOD11 calculates the virtual engine speed and the virtual engine torque. The virtual engine speed is calculated from the vehicle speed, the overall deceleration ratio, and the slip rate of the virtual clutch. The virtual engine torque is calculated from the virtual engine speed and the accelerator operation amount. The vehicle speed is acquired from the signal of the vehicle speed sensor 11. The accelerator operation amount is acquired from the signal of the accelerator pedal stroke sensor 12. The overall deceleration ratio is a numerical value obtained by multiplying the gear ratio of the virtual transmission by a deceleration ratio determined by a mechanical structure from the virtual transmission to the driving wheels. In the engine model MOD11, a relationship between the virtual engine speed and the virtual engine torque is defined for each accelerator operation amount. Engine characteristics of the engine model MOD11 can be selected by the driver by the operation of the HMI 20.

The clutch model MOD12 calculates the torque transmission gain. The torque transmission gain is a gain for calculating the torque transmission degree of the virtual clutch in accordance with the clutch operation amount. When the stick shift mode with clutch operation is selected as the shift mode, the clutch operation amount is acquired from the signal of the clutch pedal stroke sensor 16. The clutch operation amount is 0% at the starting position of the pseudo clutch pedal 26 and is 100% at the terminal position of the pseudo clutch pedal 26. In the clutch model MOD12, the torque transmission gain is given with respect to the clutch operation amount. The torque transmission gain is converted to a clutch torque capacity amount of the virtual clutch, in other words, a virtual clutch torque capacity amount. Then, a virtual clutch torque input to the virtual transmission from the virtual clutch is calculated on the basis of comparison between the virtual clutch torque capacity amount and the virtual engine torque calculated by the engine model MOD11. In the clutch model MOD 12, a value obtained by subtracting the torque transmission gain from 1 is calculated as the slip rate. The slip rate is used in the calculation of the virtual engine speed in the engine model MOD11.

When the paddle shift mode is selected as the shift mode, the clutch operation amount input to the clutch model MOD12 is calculated with use of a clutch operation model. Even when the stick shift mode without clutch operation is selected as the shift mode, the clutch operation amount input to the clutch model MOD 12 is calculated with use of a clutch operation model. The clutch operation model is a model simulating clutch operation of a simulated driver. When the paddle shift mode is selected, the vehicle speed, the virtual engine speed, and a signal from the paddle shift switch 15 are input to the clutch operation model. When the stick shift mode without clutch operation is selected, the vehicle speed, the virtual engine speed, and a signal from the shift position sensor 14 are input to the clutch operation model.

The signal from the paddle shift switch 15 and the signal from the shift position sensor 14 are used to measure a timing of the clutch operation. When shift operation of the driver is detected in accordance with the signal from the paddle shift switch 15 and the signal from the shift position sensor 14, the clutch operation amount is caused to be the maximum such that the virtual clutch is disengaged in the clutch operation model. The vehicle speed and the virtual engine speed are used in the calculation of the clutch operation amount. The clutch operation amount is calculated on the basis of a rotation speed difference between the rotation speed of an input shaft of the virtual transmission and the virtual engine speed calculated from the vehicle speed in the clutch operation model so as to cause the rotation speed of the input shaft of the virtual transmission and the virtual engine speed to smoothly coincide with each other.

The transmission model MOD13 calculates a virtual gear ratio. The virtual gear ratio is a gear ratio determined by the shift position in the virtual transmission. The virtual gear ratio is set for each shift position. In the stick shift mode, the shift position is associated with the signal of the shift position sensor 14 in a one-to-one manner. In the paddle shift mode, the shift position is shifted up by one speed when an upshift signal of the paddle shift switch 15 is received, and the shift position is shifted down by one speed when a downshift signal of the paddle shift switch 15 is received. The transmission model MOD13 calculates a virtual transmission torque with use of the virtual gear ratio and the virtual clutch torque. The virtual transmission torque is a virtual torque output from the virtual transmission. The control apparatus 101 controls the inverters 3F, 3R so as to change the output torques of the electric motors 4F, 4R in accordance with the virtual transmission torque.

The vehicle model MOD01 calculates a driving wheel torque from the virtual transmission torque and the deceleration ratio. The driving wheel torque is a total of the torque that acts on the left and right front wheels 6F and the left and right rear wheels 6R. The torque allocation to the front wheels 6F and the rear wheels 6R can be fixed or can be actively or passively changed. In the processing P132, the torque of the front electric motor 4F in the manual mode is calculated by multiplying the driving wheel torque calculated in the processing P131 by the torque allocation rate to the front wheels 6F and the deceleration ratio from an output shaft of the front electric motor 4F to the front wheels 6F. The control apparatus 101 controls the front inverter 3F so as to cause the front electric motor 4F to generate the torque calculated in the processing P132. In the processing P133, the torque of the rear electric motor 4R in the manual mode is calculated by multiplying the driving wheel torque calculated in the processing P131 by the torque allocation rate to the rear wheels 6R and the deceleration ratio from an output shaft of the rear electric motor 4R to the rear wheels 6R. The control apparatus 101 controls the rear inverter 3R so as to cause the rear electric motor 4R to generate the torque calculated in the processing P133.

### 5. Downshift Notification at Time of Deceleration Control

When the battery electric vehicle 100 enters a curved road, the control apparatus 101 executes deceleration control that autonomously decelerates the battery electric vehicle 100. The deceleration control is one of functions of the advanced driver-assistance system also applied to the manual transmission internal combustion engine vehicle. The deceleration control is executed when the control mode of the battery electric vehicle 100 is the autonomous mode as well as when the control mode of the battery electric vehicle 100 is the manual mode.

When the deceleration control is executed in the manual transmission internal combustion engine vehicle, the driver operates a shifter of the manual transmission so as to maintain the engine speed within the torque band. A similar operation can also be performed in the battery electric vehicle 100 when driving is performed in the manual mode. In the manual mode in which the operation of the manual transmission internal combustion engine vehicle is reproduced, gear shift operation that is similar to that of the actual manual transmission internal combustion engine vehicle is requested against the driver.

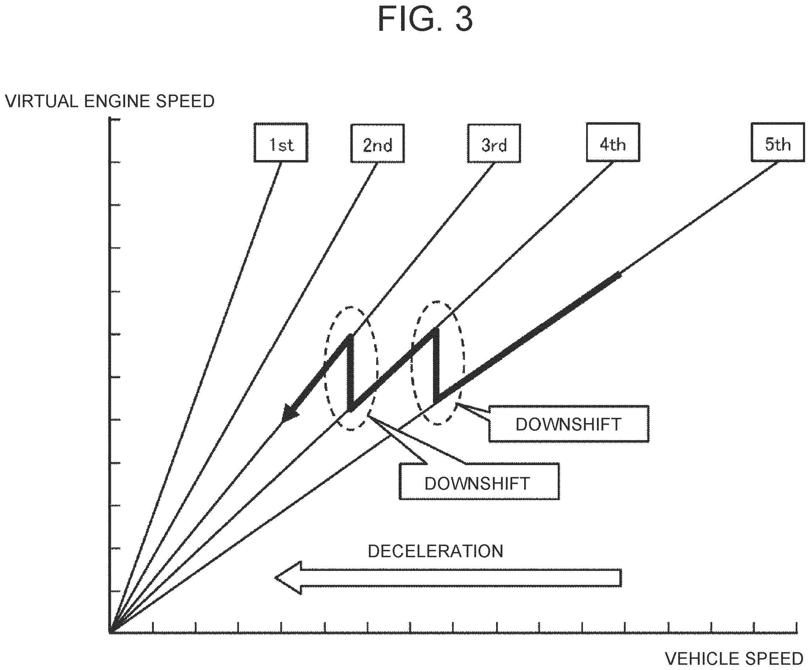

FIG. 3 is a diagram showing one example of an ideal gear shift operation at the time of deceleration in the manual mode. The drawing shows the relationship between the vehicle speed and the virtual engine speed in each of the shift positions from the first gear to the fifth gear. In this example, the shift position before the start of deceleration is the fifth gear. The shift position is shifted down to the fourth gear and is further shifted down to the third gear in accordance with the deceleration. By performing the downshift operation as above at the time of deceleration, the virtual engine speed used in the calculation of the vehicle model MOD01 is maintained within the torque band.

However, a driver that does not have driving experience of the manual transmission internal combustion engine vehicle may not have knowledge on the necessity of the downshift operation at the time of deceleration. When deceleration is performed while the shift position is maintained without performing the gear shift operation, the virtual engine speed goes out of the torque band. As a result, the rise of the virtual engine torque when the next acceleration is to be performed is delayed. In the manual mode, the torques of the electric motors 4F, 4R are controlled on the basis of the virtual engine torque. Therefore, the delay of the rise of the virtual engine torque leads to the decrease of the acceleration property.

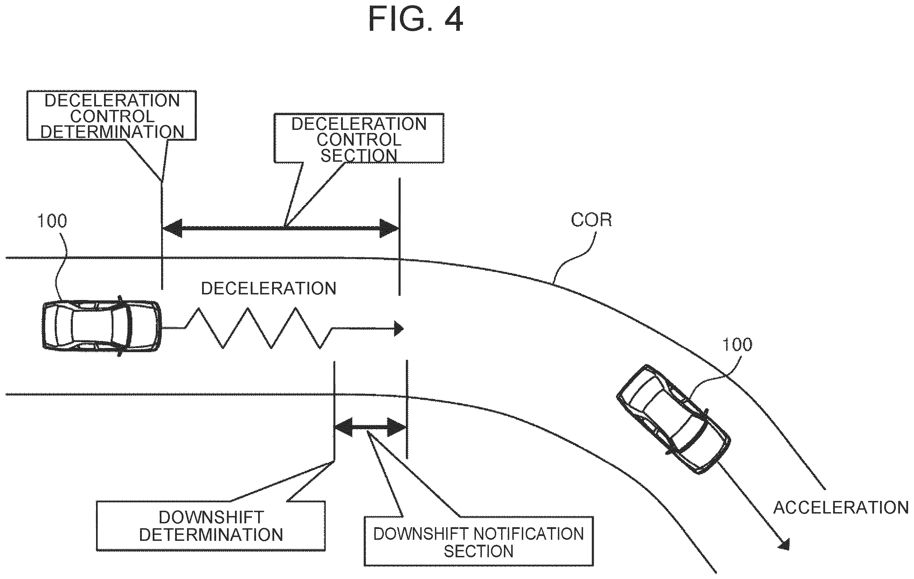

Thus, at the time of execution of the deceleration control, the control apparatus 101 gives a notification for encouraging the driver to perform the downshift operation. FIG. 4 is a diagram describing downshift notification at the time of execution of the deceleration control. When the battery electric vehicle 100 approaches a curved road COR ahead, the control apparatus 101 determines whether to execute the deceleration control on the basis of the vehicle speed of the battery electric vehicle 100 and the curvature of the curved road COR, for example. It can be determined from GPS information and map information that the battery electric vehicle 100 has approached the curved road COR. When it is determined that the deceleration control is to be executed, the control apparatus 101 decelerates the battery electric vehicle 100 by activating a regenerative brake or a hydraulic brake.

While the battery electric vehicle 100 is decelerated, the control apparatus 101 determines whether the downshift is to be executed. This determination is performed on the basis of the vehicle speed and the shift position. The virtual engine speed is calculated from the vehicle speed and the virtual gear ratio uniquely determined from the shift position, and it is predicted whether the virtual engine speed goes out of the torque band. The control apparatus 101 determines that the downshift is to be executed when it is predicted that the virtual engine speed goes out of the torque band with the current shift position.

When the downshift is to be executed, the control apparatus 101 notifies the driver to perform the downshift operation. The notification of the downshift operation is displayed on the touch screen display of the HMI 20 or is provided from the in-vehicle speaker 21 by voice. The driver may be encouraged to perform the downshift operation by both of an image and a voice. As a result of the encouragement by an image or a voice, even a driver that does not have driving experience of the manual transmission internal combustion engine vehicle can perform the downshift operation at an appropriate timing. As a result, the battery electric vehicle 100 operates as though downshift operation is performed in the manual transmission internal combustion engine vehicle, and the decrease of the acceleration property when the curved road COR is exited is reduced.

It is preferred that the downshift operation be completed before the battery electric vehicle 100 enters the curved road COR. However, there is a possibility that the downshift operation is not performed even though the driver is notified to perform the downshift operation. In this case, the control apparatus 101 ends the notification for encouraging the downshift operation at a time point at which the battery electric vehicle 100 reaches the entrance of the curved road COR.

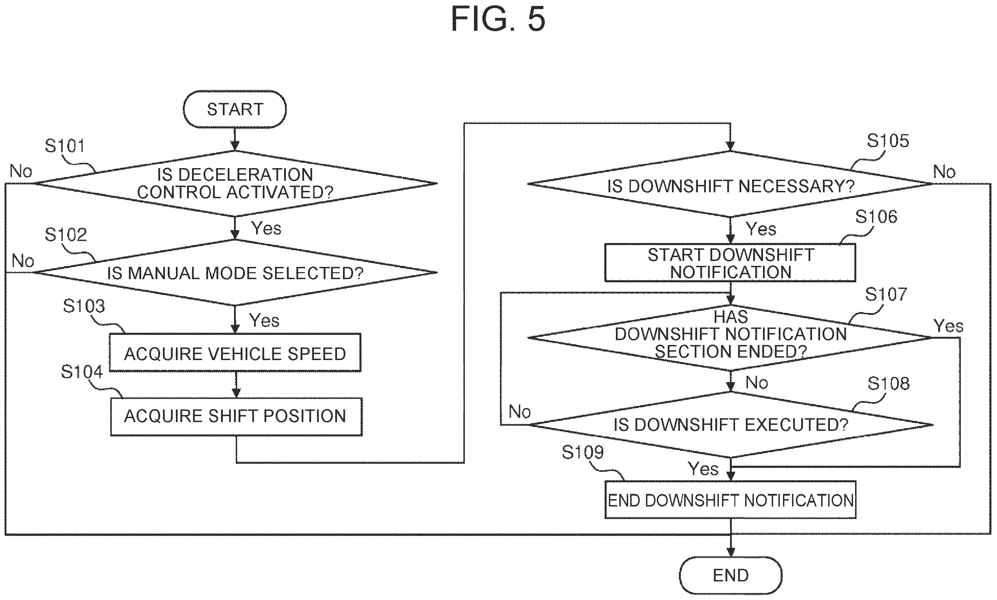

FIG. 5 is a flowchart showing a flow of the downshift notification at the time of execution of the deceleration control. In Step S101, it is determined whether the deceleration control is activated. Step S102 is executed when the deceleration control is activated, and the flow ends when the deceleration control is not activated. In Step S102, it is determined whether the manual mode is selected as the control mode. When the manual mode is not selected, the flow ends.

When the manual mode is selected, Step S103 and Step S104 are executed. The vehicle speed of the battery electric vehicle 100 is acquired in Step S103, and the shift position selected by the operation of the pseudo H-type shifter 24 or the pseudo paddle shifter 25 is acquired in Step S104. Then, in Step S105, it is predicted whether the virtual engine speed goes out of the torque band on the basis of the vehicle speed and the shift position, and it is determined whether downshift is necessary on the basis of a prediction result thereof. When downshift is not necessary, the flow ends.

When downshift is necessary, Step S106 is executed. In Step S106, a notification for encouraging the driver to perform the downshift operation is disclosed. In Step S107, it is determined whether a section until the battery electric vehicle 100 reaches the entrance of the curved road COR, in other words, a downshift notification section in which the driver is notified to perform the downshift operation has ended. When the battery electric vehicle 100 is within the downshift notification section, Step S108 is executed. In Step S108, it is determined whether the downshift operation is executed by the driver.

Step S107 and Step S108 are repeatedly executed until the downshift operation is executed. Then, when the downshift operation is executed by the driver, Step S109 is executed. Step S109 is also executed when the downshift notification section ends. In Step S109, a notification for encouraging the driver to perform the downshift operation is ended.

### 6. Autonomous Downshift at Time of Deceleration Control

In the manual mode, the operation of the pseudo gear shift operation member by the driver is reflected in the calculation of the vehicle model MOD01, and the electric motors 4F, 4R are controlled on the basis of the calculation result of the vehicle model MOD01. In this case, the success or failure of the operation of the pseudo gear shift operation member by the driver is directly reflected in the behavior of the battery electric vehicle 100, and hence the driver can get the sensation of actually driving the manual transmission internal combustion engine vehicle. However, for a driver that does not have driving experience of the manual transmission internal combustion engine vehicle, there may be a scene in which the gear shift operation is desired to be performed by the control apparatus 101. One of such scenes is downshift operation at the time of entering a curved road.

Thus, in the HMI 20, an autonomous downshift mode is selectable as one option of the manual mode. When the autonomous downshift mode is selected in the manual mode, downshift is autonomously performed in addition to the execution of the deceleration control. However, when the autonomous downshift is executed in the stick shift mode, a misalignment occurs between the shift position physically selected by the pseudo H-type shifter 24 and the virtual shift position in the calculation by the control apparatus 101. Therefore, the autonomous downshift mode can be only selected when the paddle shift mode is selected as the manual mode, and the autonomous downshift mode cannot be selected when the stick shift mode is selected.

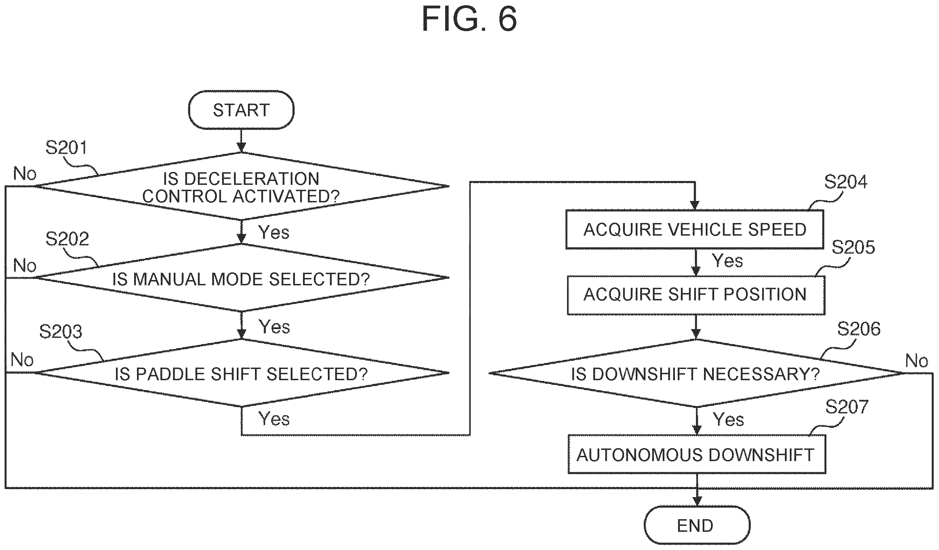

FIG. 6 is a flowchart showing a flow of the autonomous downshift at the time of execution of the deceleration control. In Step S201, it is determined whether the deceleration control is activated. Step S202 is executed when the deceleration control is activated, and the flow ends when the deceleration control is not activated. In Step S202, it is determined whether the manual mode is selected as the control mode. Step S203 is executed when the manual mode is selected, and the flow ends when the manual mode is selected. In Step S203, it is determined whether the paddle shift mode is selected as the manual mode. When the stick shift mode is selected instead of the paddle shift mode, the flow ends.

When the paddle shift mode is selected, Steps S204 and S205 are executed. The vehicle speed of the battery electric vehicle 100 is acquired in Step S204, and the shift position selected by the operation of the pseudo paddle shifter 25 is acquired in Step S205. Then, in Step S206, it is predicted whether the virtual engine speed goes out of the torque band on the basis of the vehicle speed and the shift position, and it is determined whether downshift is necessary on the basis of a prediction result thereof. Step S207 is executed when the downshift is necessary, and the flow ends when the downshift is not necessary. In Step S207, the downshift is autonomously performed in the calculation of the vehicle model MOD01 by the control apparatus 101.

### 7. Other Embodiments

As another configuration of the battery electric vehicle 100, it is also possible to include only the pseudo H-type shifter 24 and the pseudo clutch pedal 26 without including the pseudo paddle shifter 25. As another configuration of the battery electric vehicle 100, it is also possible to include only the pseudo paddle shifter 25 without including the pseudo H-type shifter 24 and the pseudo clutch pedal 26. As another configuration of the battery electric vehicle 100, it is also possible to include only the pseudo H-type shifter 24 without including the pseudo paddle shifter 25 and the pseudo clutch pedal 26.

The electric motors 4F, 4R are included on the front and the rear of the battery electric vehicle 100, but it is also possible to include only one. The battery electric vehicle 100 is a battery electric vehicle that travels by electricity accumulated in the battery 2, but the battery electric vehicle of the present disclosure only needs to be a battery electric vehicle having an electric motor as a drive source. Therefore, the battery electric vehicle of the present disclosure can also be applied to a plug-in hybrid electric vehicle (PHEV) or a fuel-cell electric vehicle (FCEV).

## Claims

1. A battery electric vehicle (100) having an electric motor (4F, 4R) as a drive source, the battery electric vehicle comprising:
a driving operation member (22, 23) to be used in driving of the battery electric vehicle;
a pseudo gear shift operation member (24, 25, 26) that imitates an operation member used in gear shift operation of a manual transmission internal combustion engine vehicle; and
a control apparatus (101) configured to control operation of the battery electric vehicle (100) with respect to operation of the driving operation member (22, 23) in accordance with an operation state of the pseudo gear shift operation member (24, 25, 26), wherein the control apparatus (101) is configured to:
execute deceleration control that autonomously decelerates an own vehicle when the own vehicle enters a curved road (COR); and
encourage a driver to operate the pseudo gear shift operation member (24, 25, 26) in a manner similar to a manner when a gear ratio of the manual transmission internal combustion engine vehicle is increased when the deceleration control is executed.

2. The battery electric vehicle according to claim 1, wherein:
the driving operation member includes an accelerator pedal (22);
the pseudo gear shift operation member includes a pseudo shifter (24, 25) that imitates a shifter of a manual transmission; and
the control apparatus (101) is configured to:
change a torque of the electric motor (4F, 4R) in accordance with a vehicle speed of the own vehicle, an operation amount of the accelerator pedal (22), and a shift position selected by operation of the pseudo shifter (24, 25); and
encourage the driver to perform downshift operation of the pseudo shifter (24, 25) when the deceleration control is executed.

3. The battery electric vehicle according to claim 1, wherein:
the driving operation member includes an accelerator pedal (22);
the pseudo gear shift operation member includes:
a pseudo shifter (24, 25) that imitates a shifter of a manual transmission; and
a pseudo clutch operation apparatus (26) that imitates a clutch operation apparatus; and
the control apparatus (101) is configured to:
change a torque of the electric motor (4F, 4R) in accordance with a vehicle speed of the own vehicle, an operation amount of the accelerator pedal (22), a shift position selected by operation of the pseudo shifter (24, 25), and an operation amount of the pseudo clutch operation apparatus (26); and
encourage the driver to perform downshift operation of the pseudo shifter when the deceleration control is executed.

4. The battery electric vehicle according to claim 1, wherein:
the pseudo gear shift operation member includes a pseudo sequential shifter (25) that imitates a sequential shifter of a manual transmission; and
the control apparatus (101) is configured to:
have an autonomous downshift mode that raises a virtual engine speed by autonomously increasing a virtual gear ratio of the manual transmission internal combustion engine vehicle reproduced in the battery electric vehicle; and
execute the autonomous downshift mode when downshift operation of the pseudo sequential shifter (25) by the driver is not performed at a time of the execution of the deceleration control.

5. The battery electric vehicle according to claim 1, wherein:
the pseudo gear shift operation member includes:
a pseudo sequential shifter (25) that imitates a sequential shifter of a manual transmission; and
a pseudo H-type shifter (24) that simulates an H-type shifter of the manual transmission;
either one of the pseudo sequential shifter (25) or the pseudo H-type (24) shifter is selectively operatable; and
the control apparatus (101) is configured to:
have an autonomous downshift mode that raises a virtual engine speed by autonomously increasing a virtual gear ratio of the manual transmission internal combustion engine vehicle reproduced in the battery electric vehicle;
execute the autonomous downshift mode when downshift operation of the pseudo sequential shifter (25) by the driver is not performed at a time of the execution of the deceleration control when the pseudo sequential shifter (25) is selected; and
refrain from executing the autonomous downshift mode when downshift operation of the pseudo H-type shifter (24) by the driver is not performed at a time of the execution of the deceleration control when the pseudo H-type shifter (24) is selected.
